# EUROPEAN PATENT APPLICATION

(11) **EP 2 713 197 A1**
(43) Date of publication of application: **02.04.2014**
(21) Application number: 13186230.2
(22) Date of filing: 26.09.2013
(51) Int. Cl.: G02B 27/01

(54) **Head-up display system with dynamic image field and brightness control**

(30) Priority: 28.09.2012 US 201213630398
(71) Applicant: Delphi Technologies, Inc., Troy MI 48007 (US)
(72) Inventor: Hudson, Mark W., Russiaville, IN Indiana 46979 (US)
(74) Representative: Allain, Michel Jean Camille

(57) **Abstract**

A head-up display system (10, 48) having a diffusing image plane or diffuser (22, 60). The light output of a relatively small image source (26, 64) is imaged on the diffuser (22, 600 by way of imaging optics (22, 66). A mirror (24, 62) is used to image light from the diffuser (22, 60) onto a windshield (16, 54) and correct for distortion caused by the windshield. The diffuser (22, 60) is advantageously used when a large field-of-view (98) is desired, or sun load characteristics need to be addressed. The diffuser (22, 60) may be flat or curved in order to optimize the system for different applications. The magnification of the mirror (24, 62) may be made relatively low, and the solar emergency density that is made incident on the image source (26, 64) is reduced, providing for a low cost, high performance, color head-up display system (10, 48). A drive mechanism (42, 82) allows selective operator controlled repositioning of the image source (26, 64) and imaging optics (28, 66) with respect to diffuser (22, 60) to vary image size, position and/or intensity.

## Description

### TECHNICAL FIELD

The present invention generally relates to head-up display (HUD) systems, and more particularly relates to an automotive windshield projection HUD system capable of dynamically changing the projected image.

### BACKGROUND OF THE INVENTION

As the design intent image field of a head-up display projected within a vehicle operator's field-of-view (FOV) increases, the size of the image source tends to increase in order to keep a lower optical system magnification. Unfortunately, the image source size is desired to be as small as possible to reduce cost of the image source and associated packaging.

As image sources become smaller, the optical system needs to increase magnification and is challenged in producing a minimally distorted image. The magnification increase can produce an unacceptable sun load condition presented to the image source as well.

Sun load is a calculated energy irradiance value expressed in *watts*/ *cm*². The heating of the image source is due to the focusing of the sun's energy upon its surface. Should the magnification of the optical system be high enough to produce an excessive sun load condition, the image source will be damaged.

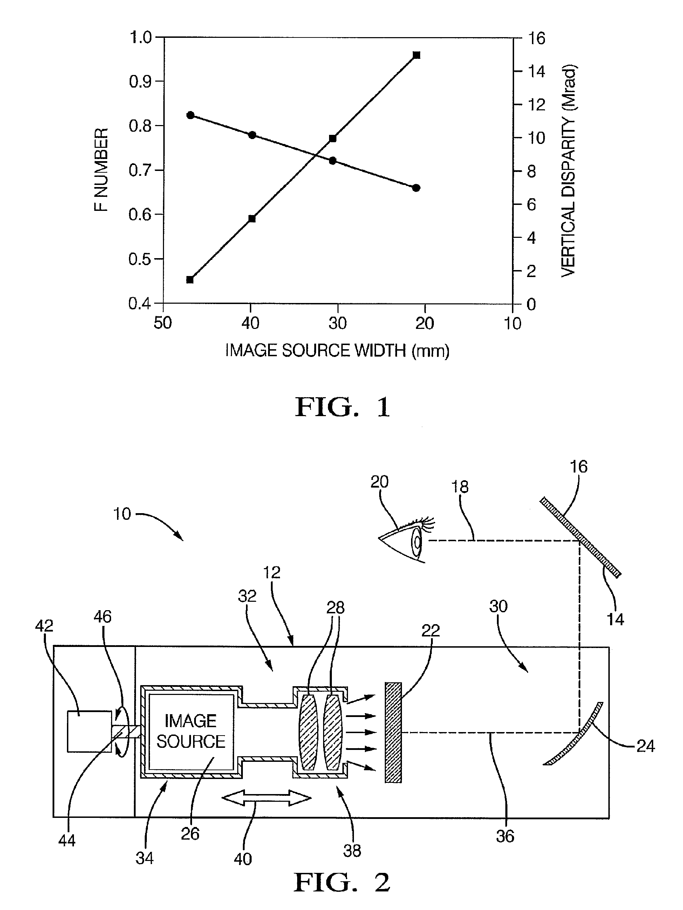

Optical system performance also suffers in conventional systems when using small image sources. For a typical 10 degree horizontal field-of-view (HFOV) head-up display with an eye box of 73.5 mm in width, the relationship among vertical disparity error (the worst error within field-of-view and eye box), typical system f-number versus the horizontal dimension of the image source are shown in Figure 1. As can be seen in Figure 1, as the image width drops below 50 mm, the vertical disparity error increases quite rapidly.

A driver has the ability to tolerate vertical disparity from 1 to 9 mrad, otherwise double vision can occur. The vertical disparity error will stay about 1 mrad when the image source is kept greater than 50 mm. The corresponding f-number of the optical system should stay above 0.8 to maintain a reasonable package size.

Therefore, with the use of conventional optics, the size of the image source should be greater than 50 mm in width. A cost penalty is now realized due to the inability to use smaller than 50 mm wide image sources (for this example).

U.S. Patent No. 6,043,937 to Mark W. Hudson et al. entitled "Head-Up Display System Using A Diffusing Image Plane" provides a solution allowing the use of low cost effective image sources, which also meets heads-up display optical performance requirements, wherein a diffusing image plane or diffuser is employed. The specification of U.S. Patent No. 6,043,937 is hereby incorporated herein by reference.

### SUMMARY OF THE INVENTION

The present invention provides a high resolution, high brightness color head-up display (HUD) for the automotive market. The present invention employs a collimated light source such as a Pico Projector to adjust the size and shape of the image field within the vehicle operator's field of view (FOV), as well as the brightness of images within the image field, thereby allowing the vehicle operator to select how much information is to be provided, where the information is to be located within the image field, and how bright the display should be. With light engines, collimated light is used to project the image into a diffusion screen creating a real image surface. The present invention overcomes a shortcoming of known HUD systems wherein the image size is fixed. With the present invention, the light engine can be moved to increase or decrease the size of the display. This has the advantage of providing a smaller, brighter image for day-time use, as well as a a larger, muted image for night-time use. The present invention can accommodate night vision systems within the same package. The tolerance required to create a perfect focus image is resolved by moving the light engine in the same plane as the display diffuser base on the collimated light source.

The present invention provides a HUD system in which the image size is dynamically changed to allow the driver to determine how much information or situational awareness indicators are presented and permits the creation of a larger image field within the operator's FOV in the same package. The present invention can also be employed for other display applications such as instrument clusters and infotainment displays.

The present invention further provides for an improved head-up display system having a diffusing image plane or diffuser. The present diffusing image plane head-up display system comprises a windshield, an image or display source, and a mirror disposed between the windshield and image source. The diffuser comprises a diffusing image plane that is disposed between the mirror and the image source. The diffuser may be flat or curved in order to optimize the system for different applications. Imaging optics are also disposed between the diffuser and the image source that image the output of the image source into the diffuser. In addition, application optics may be disposed between the diffuser and the mirror, as required, for a particular vehicle application, to address specific imaging requirements.

These and other features and advantages of this invention will become apparent upon reading the following specification, which, along with the drawings, describes preferred and alternative embodiments of the invention in detail.

### BRIEF DESCRIPTION OF THE DRAWINGS

The present invention will now be described, by way of example, with reference to the accompanying drawings, in which:

FIG. 1, is a graph illustrating f-number and disparity versus source width;

FIG. 2, is a schematic view of a first embodiment of an exemplary diffusing image plane head-up display system in accordance with the principles of the present invention;

FIG. 3, is a schematic view of an alternative embodiment of an exemplary diffusing image plane head-up display system in accordance with the principles of the present invention;

FIG. 4, is a broken, cross-sectional view of a vehicle equipped with a head-up windshield display in accordance with a third embodiment of the invention;

FIG. 5, is a cut-away view of the vehicle interior equipped with the head-up windshield display system of Figure 4; and

FIG. 6, is a block diagram of the system of Figure 4, in accordance with one embodiment of the invention.

Although the drawings represent embodiments of the present invention, the drawings are not necessarily to scale and certain features may be exaggerated in order to illustrate and explain the present invention. The exemplification set forth herein illustrates an embodiment of the invention, in one form, and such exemplifications are not to be construed as limiting the scope of the invention in any manner.

### DESCRIPTION OF THE PREFERRED EMBODIMENT

A conventional vehicular or automotive head-up display system includes a windshield, a mirror and an image or display source. Application optics, such as the mirror, for example, optically interfaces directly between the windshield and the image source. The optical design, sun load characteristics and performance of the conventional head-up display system are a result of the size of the image source versus the required image field of the head-up display system and performance requirements. Also, such conventional head-up display systems suffer from sun loading problems.

Referring to Figure 2, a schematic view of a first embodiment of a head-up display system 10 is illustrated. Head-up display system 10 has a head-up display module 12 configured for installation in a passenger vehicle and positioned to reflect an image off a surface 14 of a vehicle windshield 16 into the line-of-sight 18 of a vehicle operator or passenger 20.

When a large image field is desired, or the performance and sun load characteristics are unacceptable, a diffuser 22 or diffusing image plane may be employed in accordance with the present invention.

The diffusing image plane head-up display system 10 comprises a windshield 16 which is viewed by the driver 20 and a curved or focusing mirror 24 disposed to focus an image on the windshield 16. The diffuser 22 is disposed between the mirror 24 and an image or display source 26 substantially at a focus of the mirror 24. Imaging optics 28 are disposed between the diffuser 22 and the image source 26 that image the output of the image source 26 onto the diffuser 22. In addition, application optics may be disposed between the diffuser 22 and the mirror 24, as required, for a particular vehicle application, to address specific imaging requirements and to provide a specific image field within the field-of-view (FOV) for the system 10.

The image source 26 projects an image on the diffusing plane 22, thus creating two optical subsystems 30, 32 within the head-up display system 10. The first optical subsystem 30 employs the curved mirror 24 to correct for distortion caused by the windshield 16.

The image source 26 and imaging optics 28 are fixedly carried within a unitary housing 34 disposed within the display module 12. The housing 34 maintains the image source 26 and the imaging optics 22 in a fixed, spaced relationship in alignment with an axis 36 focused on the line-of-sight 18 of the system 10. The assembly of the housing 34, the image source 26 and the imaging optics 28 is defined as a light engine 38 which outputs collimated light substantially parallel to the axis 36. The light engine 38 is arranged for limited controlled bidirectional displacement along axis 36 as suggested by double-headed arrow 40.

A drive motor 42 has an axial drive shaft 44 rotatably engaging the housing 34 as illustrated by double-headed arrow 46 rendering it infinitely axially adjustable. This results in a high resolution, high brightness color head up display. The use of a collimated light source permits adjusting the image field size, shape and brightness, allowing the driver to decide how much information is required and how bright the display should be. The light engine 38 projects a collimated light based image onto the diffusion screen 22 creating a real image surface. When the light engine 38 is repositioned, the size of the display is increased or decreased. This provides a beneficial design enabling a relatively smaller, brighter image for day time use, and then create a relatively larger, dimmer image for night time use as the night vision of the same package. The tolerance required to create a perfect focus image is resolved by incrementally moving the light engine 38 in the same plane as the display diffuser base of the collimated light source.

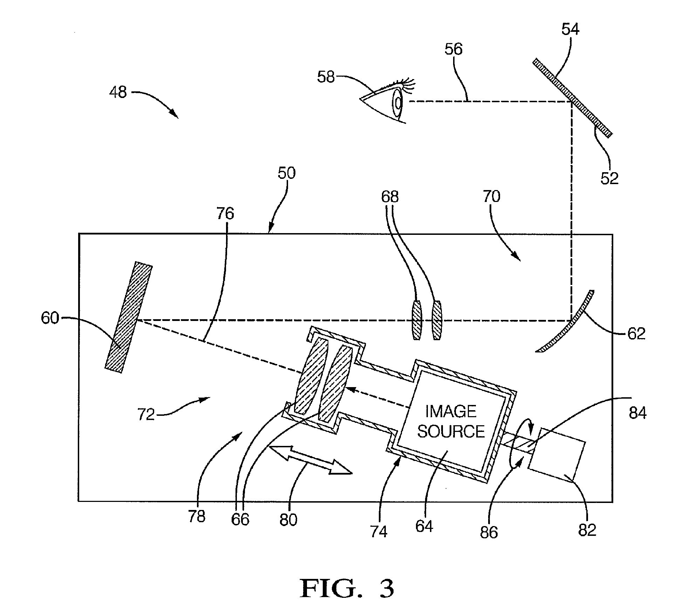

Referring to Figure 3, a schematic view of a second embodiment of a head-up display system 48 is illustrated. Head-up display system 48 has a head-up display module 50 configured for installation in a passenger vehicle and positioned to reflect an image off a surface 52 of a vehicle windshield 54 into the line-of-sight 56 of a vehicle operator or passenger 58.

The diffusing image plane head-up display system 48 comprises a windshield 54 which is viewed by the driver 58 and a curved or focusing mirror 62 disposed to focus an image on the windshield 54. The diffuser 60 is disposed between the mirror 62 and an image or display source 64 substantially at a focus of the mirror 62. Imaging optics 66 are disposed between the diffuser 60 and the image source 64 that image the output of the image source 64 onto the diffuser 60. In addition, application optics 68 may be disposed between the diffuser 60 and the mirror 62, as required, for a particular vehicle application, to address specific imaging requirements and to provide a specific image field within the field-of-view (FOV) for the system 48.

The image source 64 projects an image on the diffusing plane 60, thus creating two optical subsystems 70, 72 within the head-up display system 48. The first optical subsystem 70 employs the curved mirror 62 to correct for distortion caused by the windshield 54.

The image source 64 and imaging optics 66 are fixedly carried within a unitary housing 74 disposed within the display module 50. The housing 74 maintains the image source 64 and the imaging optics 66 in a fixed, spaced relationship in alignment with an axis 76 focused on the line-of-sight 56 of the system 48. The assembly of the housing 74, the image source 64 and the imaging optics 66 is defined as a light engine 78 which outputs collimated light substantially parallel to the axis 76. The light engine 78 is arranged for limited controlled bidirectional displacement along axis 76 as suggested by double-headed arrow 80.

A drive motor 82 has an axial drive shaft 84 rotatably engaging the housing 74 as illustrated by double-headed arrow 86 rendering it infinitely axially adjustable. This results in a high resolution, high brightness color head up display system 48 which operates in all material respects to the display system 10 described herein with respect to Figure 2.

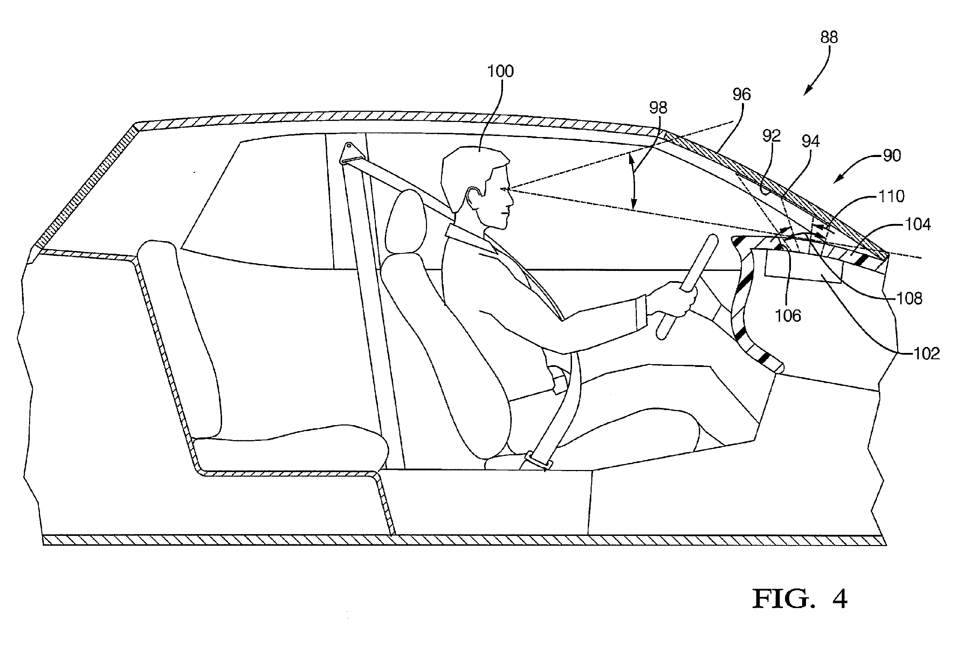

Figure 4 illustrates a non-limiting example of a vehicle 88, equipped with a vehicle windshield display system 90, similar in all material respects to the embodiments of the invention described herein with reference to Figures 2 and 3. In general, the system 90 is configured to project an image 92 on the inner surface 94 of a windshield 96 within the field of view 98 of an operator 100 residing in the vehicle 88. The windshield display system 90 may be based on any technology suitable for projecting a head up display image directly on a surface of the vehicle windshield, or on a substantially transparent device that can be attached to, installed with, or otherwise integrated into a vehicle windshield. Flexible transparent displays based on organic light emitting diode (OLED) and liquid crystal device (LCD) display technologies are available from a variety of manufacturers such as Samsung, Sony, and NEC would be suitable to apply to a windshield. Suitable display types include emissive (OLED), transmissive (LCD), transparent/opaque or fluorescence (electrowetting), or projection type display projecting light onto the windshield with or without the benefit of a film or other surface treatment. The examples described herein are generally directed to the forward view windshield of a vehicle, but it is recognized that the system 90 could also be used on a side view or rear view window of a vehicle.

Referring to Figure 4, a head up display module 102 is mounted within a vehicle dash board assembly 104 whereby an image is projected through an opening 106 in the dash board assembly 104 to reflect off a surface 94 of the windshield 96 within the vehicle operator's field of view 98. The opening is sufficiently dimensioned to accommodate a maximized sized image produced by a large arc of projection 108, a minimized sized image produced by a small arc of projection 110, and intermediate scaled images.

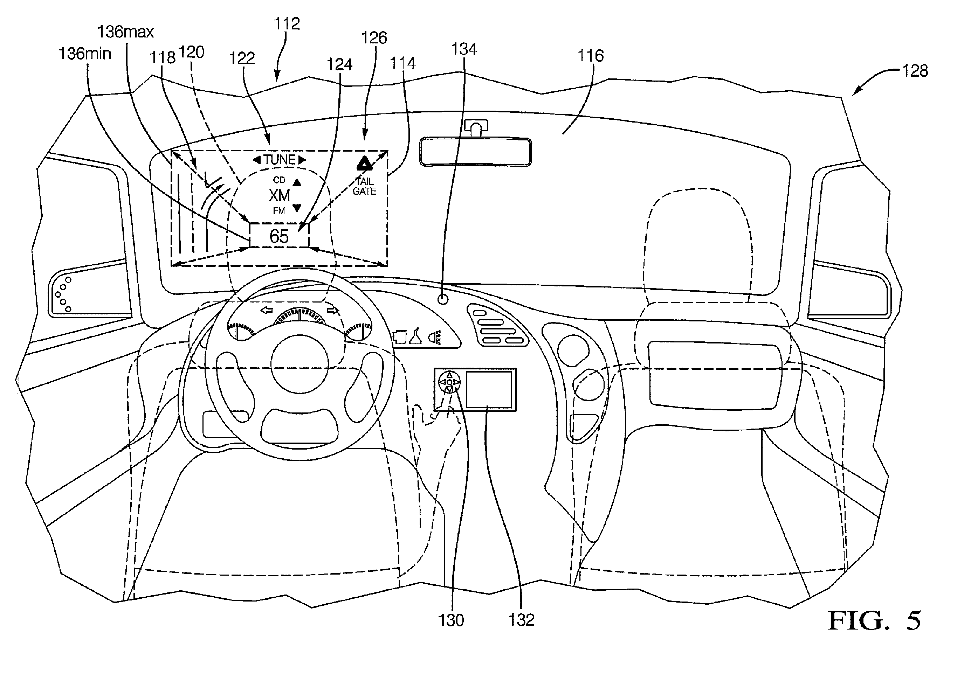

Figure 5 illustrates a non-limiting example of a graphic 112 being displayed on the windshield display image field 114 within the field of view 116, i.e. - along a line of site through the windshield display image field 114. As used herein a graphic is any character, symbol, illustration, or other feature displayed by the windshield display image field 114 such as the navigation information 118 as illustrated on the windshield display image field 114 to the left of the operator 120, the entertainment system information 122 and vehicle speed 124 as illustrated directly in front of the operator 120, or the tail-gate warning symbol 126 indicating that another vehicle is tail-gating the vehicle 128 as illustrated to the right of the operator 120. The head up display system includes operator input controls 130, operator readouts 132 and indicators 134.

Figure 5 illustrates a maximized projected image field 136(max) containing navigation information 118, entertainment system information 122, vehicle speed information 124 and tail-gate warning information 126. Upon vehicle or operator initiated actuation, the image field can be enlarged/reduced between a maximum image field size 136(max) and a minimum image field size 136(min). The rescaling of the image field 136 can be proportional (vertically and horizontally) as illustrated in Figure 5, or alternatively, disproportionately. Additionally, the image can be transitioned from a centered position within the operator's field of view to an offset location, within the field of view, such as the bottom center of the field of view 116, as illustrated.

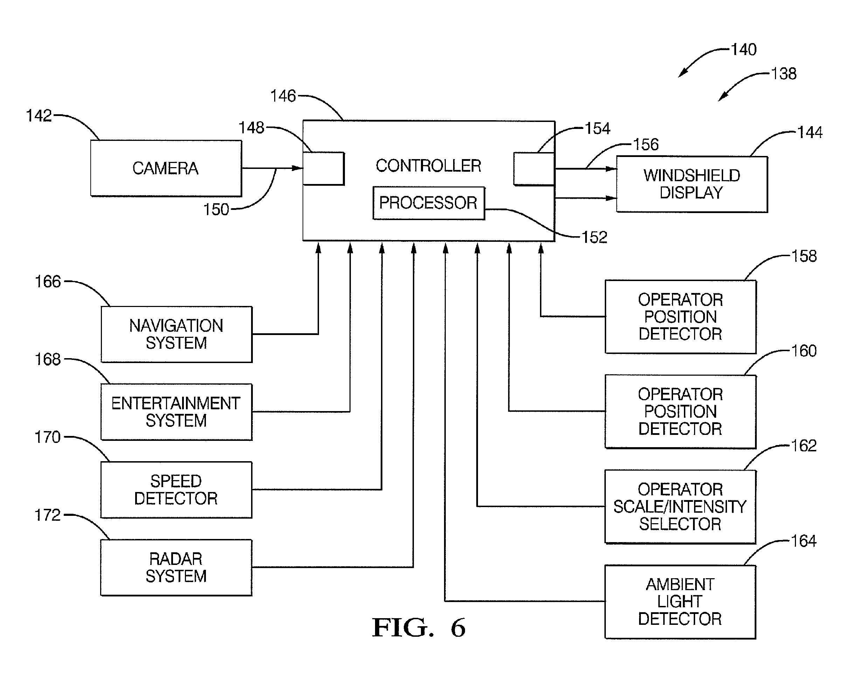

Figure 6 illustrates a non-limiting example of a schematic diagram of the controller system 138 of a head up display system 140. The system 138 may include a camera 142 configured to determine an image of the graphic displayed by a windshield display 144. It is contemplated that the system 138 may include multiple cameras located at various locations, and that image signals from these various cameras can be combined or separately analyzed to determine what is being displayed on the windshield display 144, and what is present in the scene surrounding the vehicle 128.

The system may also include a controller 146 that includes an input 148 configured to receive the image signal 150 from the camera 142, where the image signal 150 may include an indication of an image of the graphic displayed by the windshield display 144. The controller 146 may also include processor 152. The controller 146 or the processor 152 may include a microprocessor (not shown) or other control circuitry as should be evident to those skilled in the art. The controller 146 or the processor 152 may also include memory, including nonvolatile memory, such as electrically erasable programmable read-only memory (EEPROM) for storing one or more routines, thresholds and captured data. The one or more routines may be executed by the controller 146 or the processor 152 to perform steps for determining if the image signal 150 received indicates that the field of view is obstructed. The controller 146 may also include an output 154 configured to operate the windshield display by way of a graphic signal 156. Operating the windshield display generally includes indicating what graphics are to be displayed at any given time.

The system 138 may include an operator position detector 158 located, for example, in the dash so that the location of the operator's head or eyes can be determined. The system 138 may include an object detector 160 configured to detect objects in the field of view98, for example the approaching car. The object detector 160 may be radar or vision based, and such devices are well known in the art.

The system 138 may also include an operator scale/intensity selector 162, an ambient light detector 164,and inputs from a navigation system 166, an entertainment system 169, a speed detector 170, and a radar system 172.

It is to be understood that the invention has been described with reference to specific embodiments and variations to provide the features and advantages previously described and that the embodiments are susceptible of modification as will be apparent to those skilled in the art.

Furthermore, it is contemplated that many alternative, common inexpensive materials can be employed to construct the basis constituent components. Accordingly, the forgoing is not to be construed in a limiting sense.

The invention has been described in an illustrative manner, and it is to be understood that the terminology, which has been used is intended to be in the nature of words of description rather than of limitation.

Obviously, many modifications and variations of the present invention are possible in light of the above teachings. It is, therefore, to be understood that within the scope of the appended claims, wherein reference numerals are merely for illustrative purposes and convenience and are not in any way limiting, the invention, which is defined by the following claims as interpreted according to the principles of patent law, including the Doctrine of Equivalents, may be practiced otherwise than is specifically described.

## Claims

**1.** A head-up display system (10, 48) comprising:
a windshield (16, 54);
a mirror (24, 62) disposed to focus an image (92) on the windshield (16, 54);
a diffuser (22, 60) disposed at a focus of the mirror (24, 62);
an image source (26, 64) operative to output collimated light;
imaging optics (28, 66) disposed between the image source (26, 64) and the diffuser (22, 60) that images the output of the image source (26,64) onto the diffuser; (22,60) and
drive means (42, 82) operative to selectively axially reposition said image source (26, 64) and said imaging optics (28, 66) with respect to said diffuser (22, 60) to vary at least one of said image size, position and intensity.

**2.** Display system (10, 48) according to the preceding claim, further comprising application optics (68) disposed between the diffuser (60) and the mirror (62) that provide a desired field-of-view (98) for the system (48).

**3.** Display system (10, 48) according to anyone of the preceding claims, wherein the curved mirror (24, 62) corrects for distortion caused by the windshield (16, 54).

**3.** Display system (10. 48) according to anyone of claims 1 to 2, wherein the diffuser (22, 60) is substantially flat.

**4.** Display system (10, 48) according to anyone of claims 1 to 3, wherein the diffuser (22, 60) is curved.

**5.** Display system (10, 48) according to anyone of the preceding claims 1, wherein the drive means (42,82) comprises a bi-directional linear actuator.

**6.** Display system (10, 48) according to the preceeding claims, wherein said light is colored.
